# EUROPEAN PATENT APPLICATION

(11) **EP 1 193 626 A1**
(43) Date of publication of application: **03.04.2002**
(21) Application number: 00966461.6
(22) Date of filing: 13.10.2000
(51) Int. Cl.: G06F 17/60, G06F 17/30, G01C 21/00, G09B 29/00

(54) **TRIP PLANNING SYSTEM**

(30) Priority: 14.10.1999 JP 29255499
(71) Applicant: YAMAHA HATSUDOKI KABUSHIKI KAISHA, Iwata-shi, Shizuoka 438-8501 (JP)
(72) Inventor: ISHIOKA, Kazutoshi, Iwata-shi, Shizuoka 438-8501 (JP)
(74) Representative: Grünecker, Kinkeldey, Stockmair & Schwanhäusser Anwaltssozietät
(86) International application number: JP0007107
(87) International publication number: WO0127822

(57) **Abstract**

The object of the invention is to provide a travel planning system on which destinations, drive-by points, and routes that are best matched with one's preference or final wants can be accurately selected in a short time from a great number of information with respect to sightseeing spots, other places, or surroundings.

A travel planning system with a computer device comprising an interface 24 accessible to a map database 25 and a database 26 with regard to each place on the map, having a monitor screen capable of displaying data in accordance with a program, and provided with information input means 21 for executing the program, characterized by displaying a map on the said screen as well as displaying information of each place in the displayed map, allowing to select drive-by points in the travel and/or a destination based on the information displayed, and setting a traveling route according to the selected drive-by points and/or destination.

## Description

### Field of the Invention

This invention relates to the travel planning system that definitizes vague plans from databases storing large number of information with a computer at planning of travels.

### Background Art

In case of a planning of travels such as by touring with a motorcycle or driving an automobile, it often happens that one's plans or wants are not clear for the destination, stopover points or routes at the beginning of the planning, and knowledge about each place or route is not enough.

In such cases, preferable destinations will be found to make plans by searching the information about sightseeing spots, surroundings or routes, referring guidebooks for example.

However, to search the guidebooks with the vague plans to select a place or route matching with the one's preferences among large number of the possible information, repeating search of many guidebooks is required, so that a great amount of time will be spent, and it might be happened that a preferable place is overlooked or the place and route not exactly matching with the preference are selected. If the information based on the latest information not appeared on the ordinary guidebooks or arbitrary information is gathered to make a plan, much more time may need to be spent, and a planning reflecting upon the one's preferences and wants cannot be made.

The object of the present invention made in view of the situation described above is to provide a travel planning system being capable of selecting accurately in short time destinations and drive-by points matching with the one's most preference or final wants from large number of information with reference to sightseeing spots, other places or surroundings.

### Disclosure of the Invention

To solve the object described above, the present invention provides a travel planning system comprising an interface accessible to a map database and a database with regard to each place on the map, having a monitor screen capable of displaying data in accordance with a program, and provided with information input means for executing the program, characterized by displaying a map on said screen as well as displaying information of each place on the displayed map, allowing to select drive-by points in the travel and/or a destination based on the information displayed, and setting a traveling route according to the selected drive-by points and/or destination.

According to such constitution, in a computer device comprising a database including information with regard to a number of places in advance, a map and the information of each place are displayed on the monitor screen, so that a user can set locations and routes such as destinations and drive-by points on the map by means of looking the map on the screen to appropriately select the information displayed with regard to the map. Therefore, a number of information can be got together to display on the screen according to the predetermined programs, and searching and setting of places can be achieved easily within a short time in accordance with the predetermined selection decision criteria.

This planning system enables a user to make a journey plan using a largest possible amount of information including not only that the user has but that obtained through external networks such as the Internet. This system makes it possible not only to set a route when a destination is already determined but also choose a specific destination and set passage points and routes leading to the destination when the destination itself is not determined yet, according to vaguely desired items such as a direction to go (to the south, toward Yokohama, etc.), seasonal factors (seeing autumnal leaves, skiing, etc.), or scenes in locations the user wants to see (mountains, waterfalls, shrines, etc.).

In a preferred embodiment, the database with regard to the places set forth is characterized by consisting of at least one master database comprising predetermined basic information about each place and at least one additional database including new information about each place and by enabling to select either or both to display on the screen described above.

According to such constitution, a database with regard to the places comprises, in addition to the master database comprising highly reliable information with widely known information corresponding to guidebooks, the additional database including the latest information and arbitrary information obtained from a third person. By using these databases, destinations or drive-by points are set accurately in short time from large number of information including one's likes or preferences in accordance with the predetermined selection decision criteria.

In a further preferred embodiment, this invention is characterized by displaying data of each place in turn according to the predetermined ranking method when the database with regard to the place described above is displayed on the screen.

According to such constitution, information about a number of places is displayed in turn under certain rules, so that, as the ranking method is specified, information having higher selected possibility is displayed first, settings of places can be made effectively, and possibilities of improper setting are reduced to make a fully satisfactory and appropriate planning.

### Brief Description of Drawings

FIG. 1 shows a constitution of the planning system of this invention.
FIG. 2 is a flowchart of the operation procedure of the planning system shown in FIG. 1.
FIG. 3 is a flowchart of the sub-routine for downloading planning data according to the flow of FIG. 2.
FIG. 4 is a flowchart of planning using external data.
FIG. 5 shows a constitution of a planning system utilizing an external network.
FIG. 6 is a block diagram that shows the constitution of the travel planning system relating to one embodiment of the invention.
FIG. 7 is a flow chart of the main routine showing the flow of the entire operating procedure on the travel planning system related to another embodiment of the invention.
FIG. 8 shows a flow chart of a subroutine of the database selection process in the main routine as shown in the FIG. 7.
FIG. 9 shows a flow chart of a subroutine of the ranking method change process in the main routine as shown in the FIG. 7.
FIG. 10 is a flow chart of a subroutine of the point and route decision process in the main routine as shown in the FIG. 7.
FIG. 11 is a flow chart of a subroutine of the route decision process in the main routine as shown in the FIG. 7.
FIG. 12 shows a flow chart of a subroutine of the database editing process in the flow chart of the FIG. 9.
FIG. 13 shows a f low chart of a subroutine of the information acquisition process in the flow chart of the FIG. 10.
FIG. 14 is an illustration that shows an example of the first screen displayed in the planning operating procedure.
FIG. 15 is an illustration of the screen in the procedure subsequent to the screen as shown in the FIG. 14.
FIG. 16 is an illustration of the screen in the procedure subsequent to the screen as shown in the FIG. 15.
FIG. 17 is an illustration of the screen in the procedure subsequent to the screen in the FIG. 16.
FIG. 18 is an illustration of the screen in another procedure subsequent to the screen in the FIG. 16.
FIG. 19 is an illustration of the screen on which the route to the destination has been set after the procedure as shown in the FIG. 18.
FIG. 20 is an illustration of the screen on which the modification can be performed after the route has been set in the FIG. 19.
FIG. 21 is an explanatory drawing of another embodiment of this invention.
FIG. 22 is an explanatory drawing of still another embodiment of this invention.
FIG. 23 is an explanatory drawing of still another embodiment of this invention.

### The Best Form of Embodying the Invention

Embodiments of the invention are described below in reference to appended drawings.

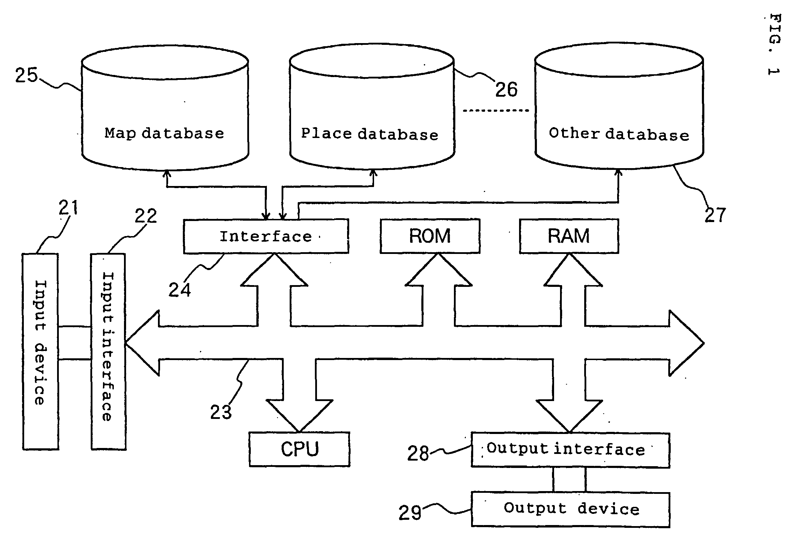

FIG. 1 shows a constitution of the planning system of this invention.

As shown, the planning process data from a user are inputted through an input device 21 such as s keyboard of a personal computer and through an interface 22 to a system bus 23 to set a journey plan according to data inside and outside the system. The system bus 23 is connected bidirectionally through an interface 24 to a map database 25, a database 26 for plural locations, and a database 27 for other various data. The interface 24 may be either an internal interface or an external interface. In case of using an external interface, various data can be obtained from outside through a communication network in a specific area or through a personal computer communication network.

The system bus 23 is connected to memory devices such as a ROM and a RAM, and also to a CPU for performing calculation operation according to the data in such memory devices, and through an interface 28 to an output device 29 such as a monitor screen or printer. This system bus 23 may also be expanded and connected to other various processing devices and data storage devices.

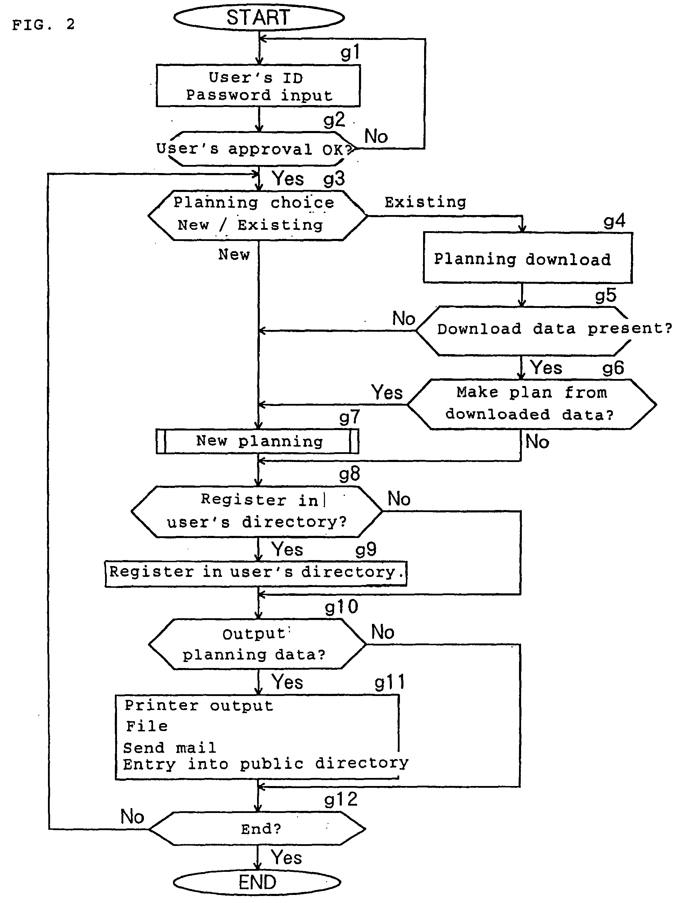

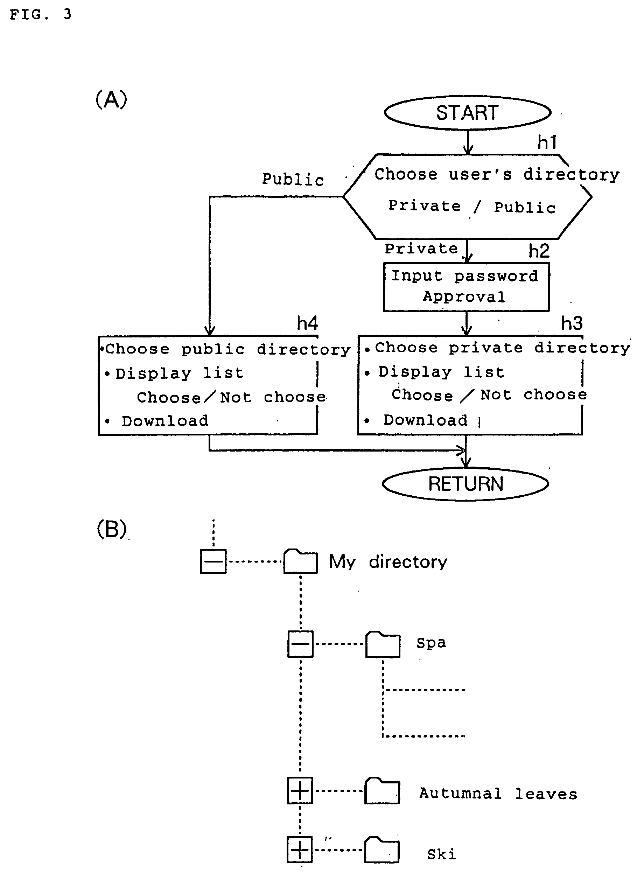

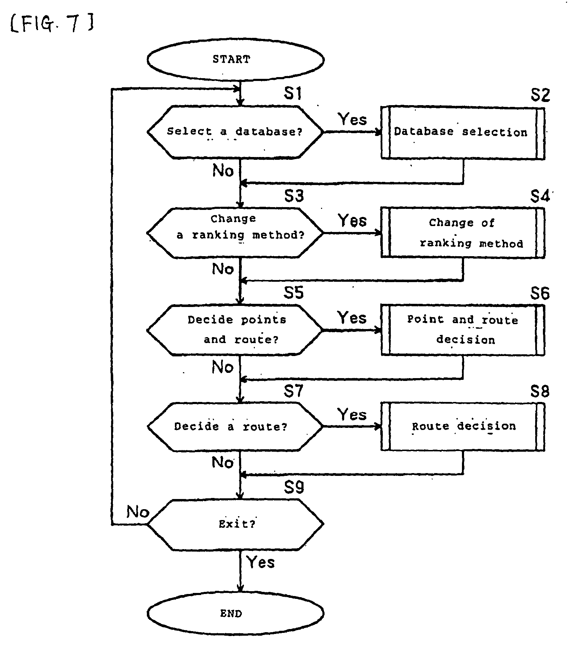

FIG. 2 is a flowchart of the operation procedure of the planning system shown in FIG. 1. First, the user's ID is verified by inputting a password or the like procedure (steps g1 and g2). Next, a choice is made whether anew plan is created or an existing plan is used (step g3). In case existing planning data are to be used, they are downloaded (step g4) as shown in FIG. 3 which will be described later. Presence of the download data is checked (step g5). If the data are present, a determination is made whether a plan is to be created according to the data (step g6). If the plan is to be created, a new planning process is carried out in the step g7. The new planning process may be the same as that of the main routine shown in FIG. 7 which will be described later.

In case the new planning is over or the planning is not made in the step g6, a judgment is made whether the data for the planning are to be registered in a user's directory (step g8). In this case, a routine is necessary for preventing other person's data as they are from being registered. In case registration is intended, the data are registered in the user's directory. After the registration (or without making registration), a judgment is made whether the data are to be outputted (step g10). In case the data are to be outputted, the output is made by printing, storage in a file, mail transmission, or entry into a public directory (step g11). When such a routine is over (step g12), a planning flow is over.

FIG. 3 is a flowchart of the sub-routine for downloading planning data (step g4) according to the flow of FIG. 2.

First, as shown in the drawing (A), a choice is made whether the directory of data to be used is one for an individual or a public directory available to plural indefinite third parties (step h1). If the directory is an individual's, the user's ID is checked by inputting a password (step h2). In case plural directories for individuals are present as shown in the drawing (B), one of them is chosen, its data contents are displayed, a determination is made whether the directory is to be chosen, and if it is to be chosen, the data are downloaded (step h3). In case a public directory is to be chosen from among plural public directories, the process is similar to the above: one directory is chosen, its data contents are displayed, a determination is made whether the directory is to be chosen, and if it is to be chosen, the data are downloaded (step h3).

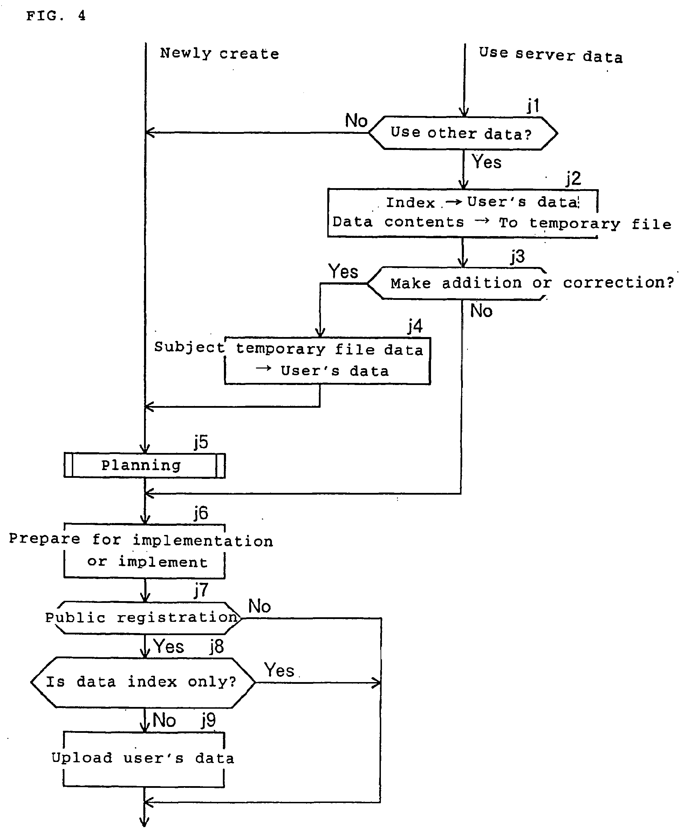

FIG. 4 is a flowchart of an example of process using existing planning data through the Internet or the like. This process corresponds to the flow after choosing in the step g3 either crating a new planning data shown in FIG. 2 or utilizing existing data.

In case existing data are utilized through an Internet server, first a judgment is made whether data registered in the server or data available through the server are to be used (step j1). In case the data are to be used, the index of the data is taken in as the user's index data, and the data contents are stored in a temporary file of the user (step j2). A judgment is made whether additional correction to the contents data is necessary (step j3). In case additional correction is necessary, the subject data from the temporary file are stored as the user's personal data (step j4). Thereafter, the data which are made the user's data are adapted to the user's desire to make a new plan (step j5). This new planning is the same process as the above-described newly creating planning, and implemented for example according to the flow shown in FIG. 7 which will be described later.

In case the new planning is over or the planning data from the server are used without addition or correction, the data are displayed for verification, printing is prepared or carried out, or downloading data to mobile devices is prepared or carried out (step j6). A judgment is made whether the planning data are to be made open to the public and registered (step j7). In case the data to be registered is the index only ('yes' in step j8), the original data is directly registered. In case the data contents are also to be registered ('no' in step j8), the user's data which are newly created or additionally corrected are uploaded and registered on the server side (step j9).

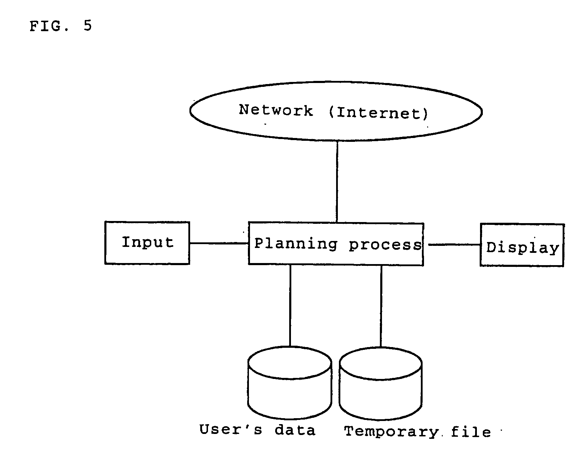

FIG. 5 shows a constitution of a planning system utilizing an external network such as the Internet.

A planning process is implemented according to the input data and the data obtained from the Internet, and the planning process results and data are displayed. In case the planning data are downloaded from the Internet, the data are first temporarily recorded and stored in a temporary file. Only the index recorded first in the temporary file is recorded in the user's data. In case the user himself carries out the planning by editing the data, by additional correction, the planning data are transferred from the temporary file to the user's data file.

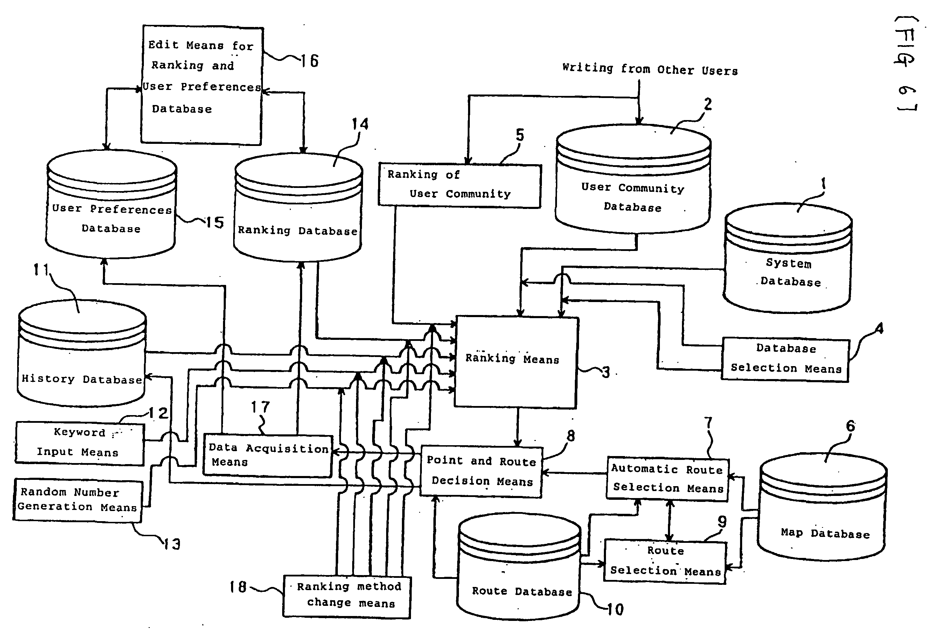

Fig. 6 shows a block constitutive diagram of the travel planning system related to one embodiment of the invention.

A system database 1 and a user community database 2 including the information with regard to large number of places are connected to a ranking means 3. The system database 1 is a preformed database that the system originally has and also a master database comprising of the highly reliable data with the widely known information about sightseeing spots and the surroundings as seen in guidebooks.

The user community is a group constituted of multiple users possessing this system and allows the users to mutually exchange their information through its system. The user community database is composed of the information relating to the sightseeing spots and the other places collected from such innumerable constituent members of the community and is an additional database including new data, one's preferences and arbitrary elements formed after the system being built. Therefore, the reliability of the database is not as high as the system database, but it may be provided with fresh and impressed information.

Both system database 1 and user community database 2 with regard to those places are comprised of image data including pictures of the places, and their respective positions on the map, the time spent for inputting the data to create those data and notes such as particularity and sightseeing spot of the places are added as information.

These system database 1 and user community database 2 are connected to the ranking means 3. The ranking means 3 is connected to the monitor screen (not shown) and the specified amount of the image information of the system database 1 and/or user community database 2 is displayed in turn on the monitor, based upon the ranking method being set. This ranking means 3 is related to a ranking method of the data, and is an operating procedure or means for inputting or selecting the command and data in the routine executing a program, and works by input operating means such as a keyboard or a mouse (same as the other means described hereafter).

Database selection means 4 is interposed between the system database 1, user community database 2 and ranking means 3 and selects either one or both of the databases as available information for the planning hereinafter set forth.

The ranking of information is determined in accordance with selecting conditions of information from the community constituent members and popularity poll intentionally made by administrator to form the database of ranking of user community 5. This database of user community ranking 5 is connected to the ranking means 3 in order to use as one of the ranking method.

A map database 6 is provided with map data, for example, map of all over Japan and can be scaled appropriately to display on the screen. As two points on the map displayed on the screen are selected, a automatic route selection means 7, a point and route decision means 8 and a route decision means 9 set the route in accordance with data in a route database 10 as described later.

To the ranking means 3 described above is also connected a history database 11, a keyword input means 12, a random number generation means 13 and a ranking database 14 in order to use as the ranking methods.

The ranking database 11 is one of the databases recording data such as the data utilized by users as the ranking method of the past and previously searched data.

The keyword input means 12 comprises a keyboard for entering keywords for ranking into a computer to execute a program.

The random number generation means 13 is used for displaying the information in the random ranking method.

The ranking database 14 is provided with data such as keywords and images for the ranking and determines the rank order of searching information including data of places displayed according to the similarity between the information in the database when the ranking method by the database is selected.

In the present system, a user preferences database 15 is provided as an editable database. This database 15 can be stored preferable information by a data acquisition means 17 when the information is found in the plans. The ranking database 14 and the user preferences database 15 are connected to an edit means 16 to allow editing such as additions or deletions and arrangements. The information in the user preferences database 15 is connected to the ranking means through the ranking database 14 and utilized as the information for determining the ranking methods and the drive-by points on the travel.

Each database to be used as the ranking methods is respectively connected through a ranking method change means 18 to the ranking means 3. As described hereinafter, the ranking method is selected by the ranking method change means 18, each database is utilized in accordance with the selected ranking method, and the data to be searched and displayed on the monitor is ranked based upon the database.

Next, the flow of programmed planning is described in the planning system with the above constitution in reference to flow charts of Figs. 7-13 and Figs 14-20 illustrating the examples of displays in these flows.

Fig. 7 shows a flow chart of the main routine on the entire system.

This flow of the entire system consists of four processes including the loops as described below, from any of which can be started, and the ranking is also optional.

At the first, the searching database selection process is determined to be carried out or not (step S1). The next step S3 is proceeded if it is not selected, and the database selection is processed if selected (Step S2). This database selection process is a selection between the system database 1 and the user community database 2 with regard to the places to be searched as described above, and its details are described in reference to FIG. 3 as shown below.

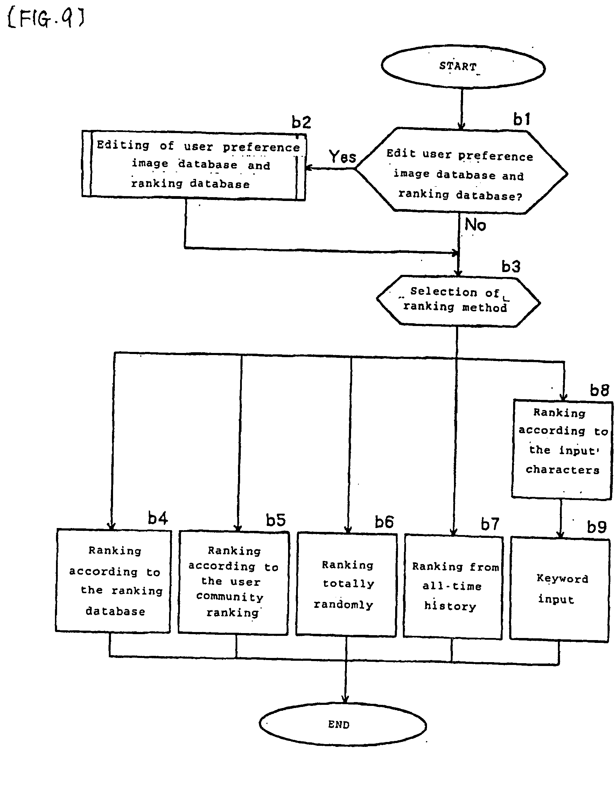

In the next Step S3, the ranking method change process is determined to be carried out or not. The next step S5 is proceeded if it is not selected, and the ranking method change is processed if selected (Step S4). The ranking method change process is a setting of a method for placing in the order of data displayed on the screen, and its details are described in reference to FIG. 9 as shown below.

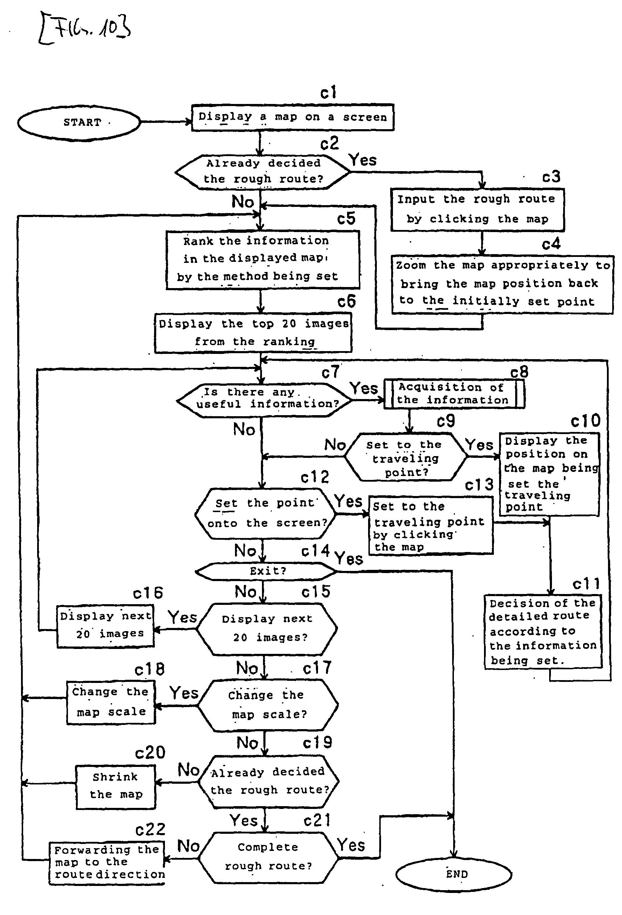

In the Step S5, the points and routes decision process is determined to be carried out or not. The next step S7 is proceeded if it is not selected, and the points and routes decision is processed if selected (Step S6). The points and routes decision process is a setting of drive-by points of the route on themap in the screen, and its details are described in reference to FIG. 10 as shown below.

In the Step S7, the route decision process is determined to be carried or not. The route decision is processed if it is selected (Step S8). The route decision process is a setting of route between points when the points are set on the map in the screen, and its details are described in reference to FIG. 11 as shown below. If the route decision process is not selected, this main routine of the planning is determined to be terminated or not (Step S9). If it is not terminated, the flow is returned to the Step S1 and continued it until it is terminated.

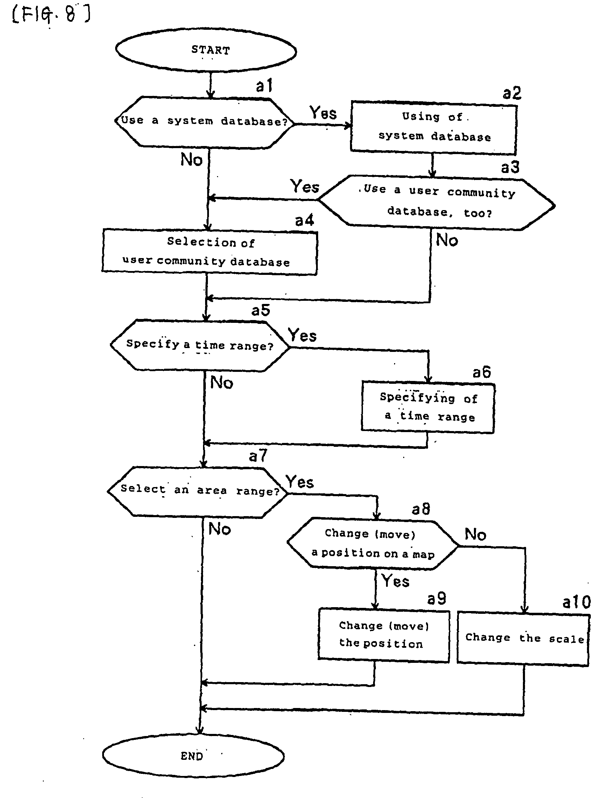

FIG. 8 shows a flow chart of a subroutine of the database selection process (above Step S2).

At Step a1, the system database 1 (see FIG. 6) is determined to be used as the searching object or not, and the system database is selected if it is used (Step a2). Step a3 is a step for determining whether the user community database 2 (see FIG. 6) is used or not, the user community database is selected if it is used (Step a4). According to these steps a1 through a4, either one or both of the system database and user community database are selected as data of searching object or decision criteria for determining to be displayed on the screen to set as the point on the travel route.

Subsequences from the next Step a5 are the steps of setting the time and position to be searched.

At first in the Step a5, the time range to be searched is determined to be specified or not. The command for specifying the time range is entered if it is specified (Step a6). This specified time range defines the information to be searched according to the period, season, days of the week and month, and time for traveling, and the searching object is limited in accordance with the time information contained in the database information, for instance.

Next, in Step a7, the area range to be searched is determined to be selected or not, which determines to be searched or not within the range of the map displayed on the screen (See FIG. 14 for example). If the displayed range is acceptable, the "Setting OK" button is clicked, and then this flow is terminated. When another area range is selected, whether the map on the screen is moved or not is determined at Step a8. If it is moved, the map is moved to display other area with the scale remained (Step a9). When larger area including the area already shown is intended to be displayed, or the area being displayed is intended to be displayed in much detail, the scale of the map is changed to zoom in or out (Step a10).

FIG. 9 shows a flow chart of subroutine illustrating the ranking method change process (Step S4 in FIG. 7).

This process determines the method for setting the displaying order of the screen when a number of searched information displayed in the map on the screen is existed. At the starting up of the system, the system starts from the previous condition being set at the exiting from the system. At the first time to use the system, ranking is preset totally randomly.

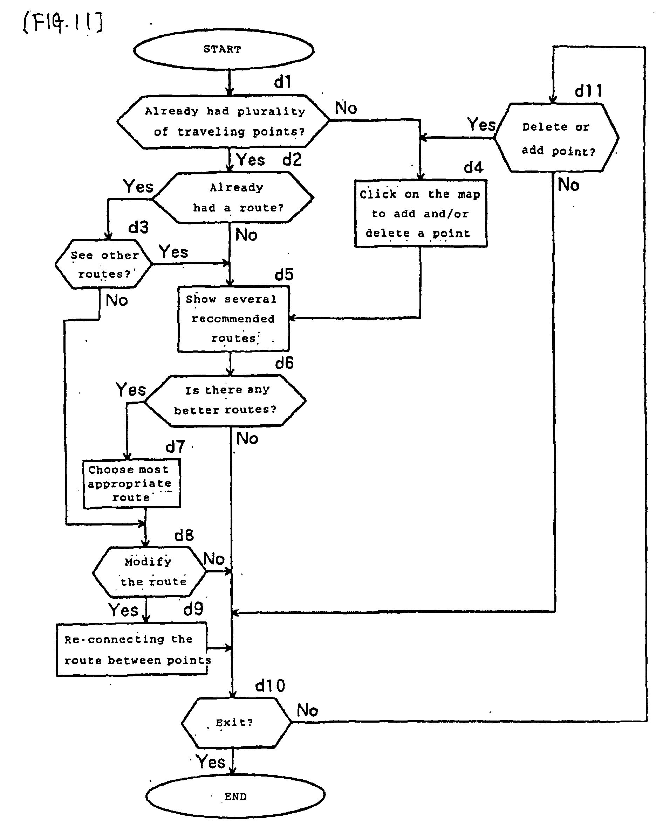

To begin with, the Step b1 determines whether the user preferences database 15 (FIG. 6) and the ranking database 14 (FIG. 6) are edited or not. If editing is selected, each database is edited using these edit means 16 (FIG. 6) as described below in reference to FIG. 12 (Step b2). In addition, for the present embodiment, the user preferences database 15 is an image database.

Then, in Step b3, the ranking method is selected. The ranking method is selected among the following five methods, Step b4 through b8.

Step b4 is a ranking process by the ranking database. In this step, the similarities are calculated quantitatively compared with an image of information storing in the ranking database, and the ranking is placed in order based on the similarities. Alternatively, keywords as the decision criteria of ranking can be stored in the ranking database to place the data including the information similar to the keywords in the order.

Step b5 is a ranking process from the database of user community ranking 5 (FIG. 6). In this step, the information to be displayed is placed in the order of popular information from the selecting condition of innumerable other users.

Step b6 is a process of ranking totally randomly the information to be displayed using the random number generation means 13 (FIG. 6).

Step b7 is a process of ranking in accordance with the all-time history using the history database 11 (FIG. 6). In this step, the displayed information in the screen map is placed in the order in accordance with the history information of the past such as the similar information or notes and keywords used by the users based on the information previously set by the users as points of the travel.

Step b8 is a process of ranking according to the input characters. In this step, keywords are input (Step b9) and used to search for ranking the information to be displayed from the words in the notes of information on the searching database. In this instance, several keywords can be preset in the system, and the similarities may be determined to place in the order in accordance with these pluralities of keywords. In such case, keywords preset in the system can be preferably added, deleted and edited.

FIG. 10 shows a flow chart of a subroutine of the point and route decision process (Step S6 in FIG. 7).

In the beginning, a map is displayed on the screen (Step c1). The rough route is determined whether it has been already decided or not (Step c2), and if the rough route is determined, the determined rough route is input by clicking the point on the route in the map (Step c3). This case is that in FIG. 14 for example, the rough route has been already decided as the starting point is Hamamatsu and the destination (point of destination) is Yatsugatake, and the drive-by points on the way are set by clicking on the map. Then, the map is scaled appropriately to bring the position on the map back to the initial set point (starting point) (Step c4).

Users can change the scale of the map; however, the scale is adjusted such that number of information within the displayed map will be a hundred at first. The scale of the map is displayed as minimum when the route or destination is not determined.

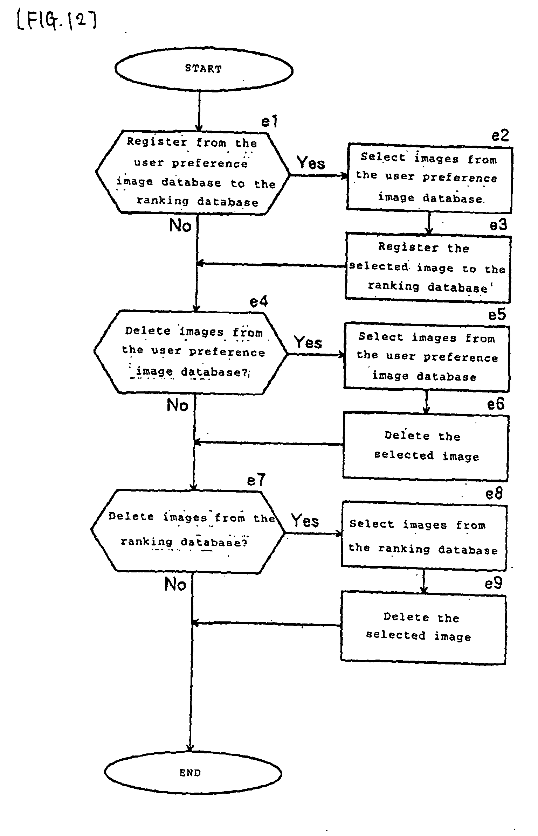

Among the information selected in the selection process of databases in the FIG. 8 described above, information within the displayed map is placed in the order with the method set in the ranking selection process routine of FIG. 9 described above (Step c5). According to the ranking, image data is displayed for predetermined number (20 images, for example) in order of higher ranking (Step c6). The determination is then made whether preferable or fully satisfying information is in the displayed images or not (Step c7). If there is favorable information, the information is recorded in the ranking database 14 (FIG. 6) and/or the user preferences database 15 with the information acquisition means 17 (FIG. 6) as shown in FIG. 13 below (Step c8).

This favorable information is determined to set to the point of travel (Step c9). As it is set to the point, the location is displayed on the map (Step 15). This case is shown in FIG. 10 for instance. As BB pond is selected and clicked as preferable image among the plurality of (4, in this example) image information displayed on the screen with the ranking, color of the information changes, and its location is displayed on the map. In FIG. 10, a mouse pointer 20 is positioned on the BB pond, and the BB pond will be set as the traveling point.

If there is no favorable information within the image data displayed in the step c7 described above, the information acquisition process (Step c8) is not carried out, these information is determined (if there is none) to set as the traveling point (Step c12), and if the point is set, its location is clicked on the map to set to the traveling point (Step c13).

As described above, when the traveling point is set on the map, detailed route is determined according to the set information (Step c11). This route is determined automatically by the system with the automatic route selection means 7 (FIG. 6) according to the point being set on the map and displayed on the map in the screen, and users cannot change the setting of the route. The setting change of the route by the user is carried out in the routine of route decision process as described below.

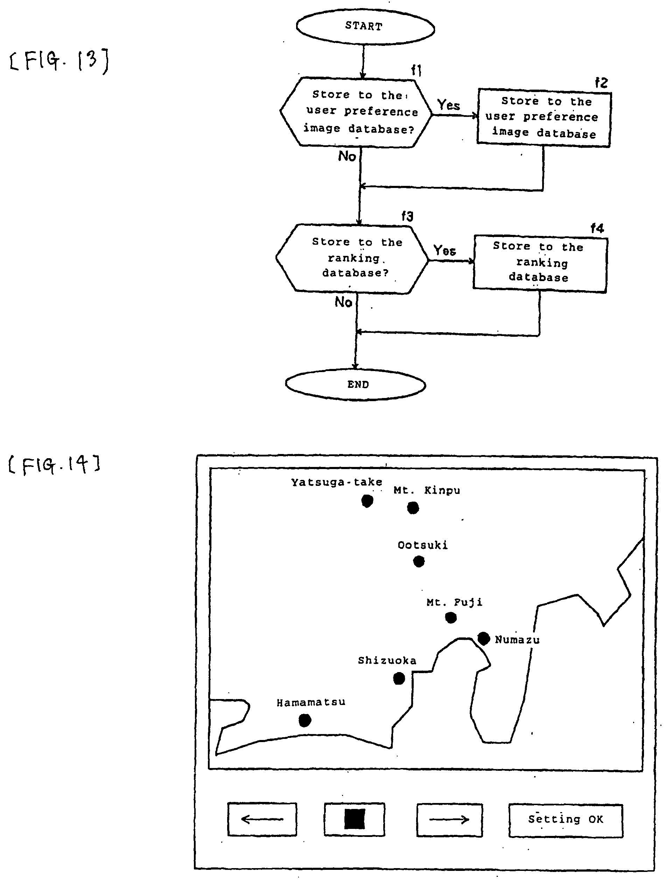

When the route is determined, the flow is returned to the Step c7, and it is determined again whether there is any further information to be set as the traveling point in accordance with the plurality of image data information on the screen. If there is no more point to be set, the process with respect to the plurality of image data being displayed on the screen is terminated. The set traveling routes and points in this state are determined to be set or not as the final route and point (Step c14). This routine is terminated if the decision is made to be the final setting. If it is made not to be the final setting, the plurality of image data (20, for example, 4 in the example of FIG. 15) of subsequent ranking is displayed and determined to be considered or not (Step c15). When the subsequent ranking information is intended to be seen, this information is displayed (Step c16). The routine of the previous Steps c7 through c14 in regard to this new image information is repeated by returning to the Step c7.

If the new image information of the subsequent ranking does not need to be displayed, whether the map scale is changed and zoomed in the range or the detail is examined or not is determined (Step c17). If the scale is changed, the scale of the map on the screen is changed (Step c18), then the flow is returned to the Step c5, and the routine work described above is repeated.

If the scale is not changed, it is determined whether the rough route has been already decided or not (Step c19). If it is not decided, the map is zoomed out (Step c20), the flow is returned to the Step c5, and the above routine work is repeated until the rough route is decided.

When the rough route has been already decided, the examination about all information on the rough route is determined to be finishedornot (Step c21). If it isnot finished, the course of pointer is forwarded along the route on the map (Step c22), then the flow is returned to the Step c5, and the above routine work is repeated until all information of the routes are finished to be seen.

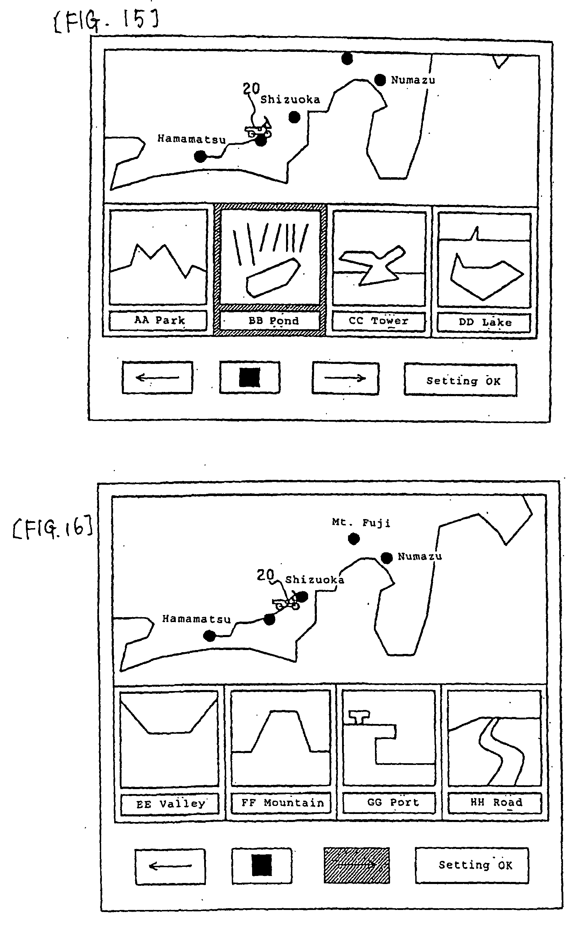

In this case, the system can be constituted as the user finishes to see all the information within the displayed range and pushes the Next button "→" on the bottom of the screen (see FIGS. 14 and 15) when the rough route is entered, the system automatically forwards the map on the screen in the direction of the rough route to display the new information (see FIG. 16).

As the user finishes to see the information within the displayed range and pushes the Next button when the rough route is not set, the system can automatically reduce the magnification of the map on the screen, expand the information to be searched, rank the information become the new searching object in accordance with the ranking method, and display several information in turns from the higher ranking.

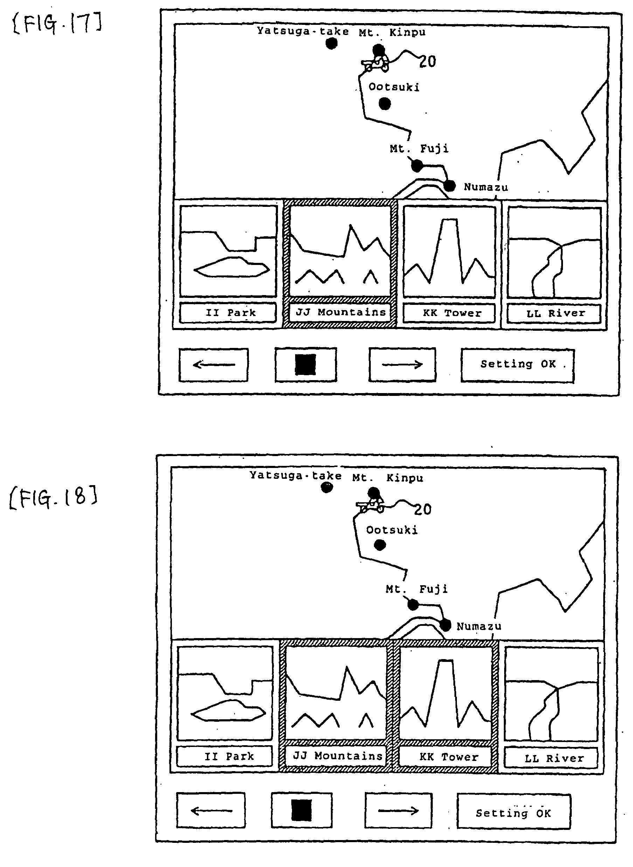

If the information in the vicinity of the way on the route is selected when the route has been already displayed, the system automatically modifies the route. For example, as shown in FIG. 17, if Mt. Kinpu (JJ Mountains) is clicked after Mt. Fuji is set as a point, the route connected between Mt. Fuji and Mt. Kinpu is set automatically. Additionally, if Ootsuki (KK Tower) is clicked, Ootsuki is set as a point of travel, and the route passing through Ootsuki is automatically set as shown in FIG. 18.

A position not having (or not displaying) the information can also be set as a travel point by clicking on the map directly.

As pushing the Next button "→" to forward the mouse pointer 20 along the route and reaching the last point of the route (Yatsuga-take in this example) being roughly set, this routine of the points and routes decision process is terminated (FIG. 14).

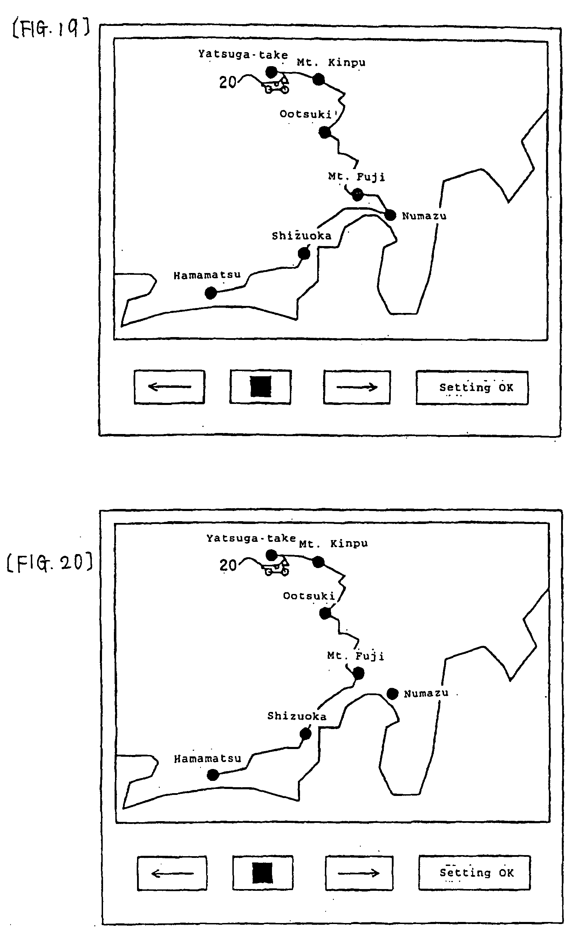

With the route being set (FIG. 19), the points being already set can be deleted by clicking the image information once again or the point on the map, for instance. In this case, the route is automatically modified without the deleted points. For example, when Numazu is clicked to be deleted from the points in the example of FIG. 19, the route is automatically set without Numazu as shown in FIG. 20.

FIG. 11 shows a flow chart of a subroutine of the route decision process (Step S8 in FIG. 7).

At the beginning, whether the plurality of traveling points have already been set on the map on the screen or not is determined (Step d1). When the points have been set, whether the route has already been set or not is determined (Step d2). When the route has been set, whether other routes also need to be examined or not is determined (Step d3). If they need to be examined, several recommended routes are shown (Step d5). These recommended routes are displayed on the screen, based on the route data stored in the route database 10 (Fig. 6) by the automatic route selection means 7 (Fig. 6) automatically selecting several ones in accordance with the points already being set. User will select the best-suited one from the displayed recommended routes. The recommended routes are automatically determined on criteria such as one way, round trip, or the shortest distance. Out of these recommended routes, only the routes that are considered to be suitable can be displayed on the basis of the user preference data or the data to be common routes.

Whether there are any better routes among the recommended routes or not is determined (Step d6), and if there are, the most appropriate one is selected (Step d7). Whether the route is modified or not is determined in accordance with this new recommended route (Step d8). If it is modified, the routes between the points are re-connected (Step d9).

After the routes between these points are re-connected, or if there are no better routes at the Step d6, or if the route is not modified at the Step d8, it is determined whether the route decision process is terminated or not (Step d10). If it is not terminated, whether the modification by adding or deleting the points is carried out or not is determined (Step d11). If it is carried out, the map is clicked to add or delete points (Step d4), and then the flow is returned to the above Step d5 to automatically select and display the recommended routes, and the routine as described above is repeated until the flow is terminated.

The difference between such route decision process as shown in the Fig. 11 and the above-described points and route decision process in the Fig. 10 is as follows: the points and route decision process is centered on the determination of the points while seeing the image information, and the route decision is automatically made by the system, and the users are not allowed to change the setting of the route, whereas the route decision process is centered on the user determination of the route, and although the system can also display the recommended route automatically, the detailed route is set by the users.

FIG. 12 shows a flow chart of editing process of the user preference database and the ranking database (subroutine of Step b2 in the flow chart of FIG. 9).

First, it is determined whether data is registered from the user preference database 15 (FIG. 6) to the ranking database 14 (FIG. 6) or not (Step e1) . If the data is registered, image data to be registered is selected from the user preference database (Step e2), and then the selected image data is stored into the ranking database (Step e3).

If it is not registered into the ranking database in the Step e1, it is determined whether the image data is deleted from the user preference database or not (Step e4). If it is deleted, the image data to be deleted is selected (Step e5), the selected image data is deleted from the user preference database (Step e6).

When the image data is not deleted from the user preference database in the Step e4, it is determined whether the image data is deleted from the ranking database or not (Step e7). If it is deleted, the image data to be deleted is selected from the ranking database (Step e8), the selected image data is deleted (Step e9).

FIG. 13 shows a flow chart of subroutine of the information acquisition process (Step c8 of the flow chart of the point and route decision process in FIG. 10). This is a process that stores certain information into the ranking database 14 and/or user preference database 15 by the information acquisition means 17 (FIG. 6).

First, when there is any preferable information (Step c7 in FIG. 10), it is determined whether the information is stored into the user preference database or not (Step f1). If it is stored, the information is registered into the user preference database (Step f2).

Then, whether the above preferable information is stored into the ranking database or not is determined (Step f3). If it is stored, the information is registered into the ranking database (Step f4).

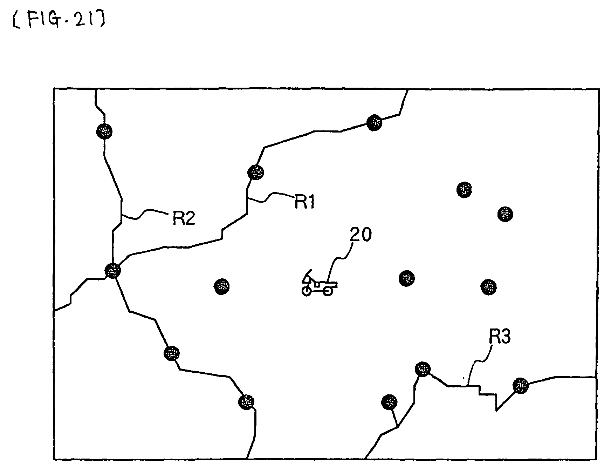

FIGs. 21 to 23 are explanatory drawings of other embodiments of the invention. In these embodiments, the monitor screen shows not only points (indicated with black dots) representing places (place names) but also routes which pass the points.

In the example of FIG. 21, routes R1, R2, R3, ... which pass the points around thepointer 20 are displayed. Theseroutes R1, R2, R3, ... are shown from the route data within the display range in the order of priority.

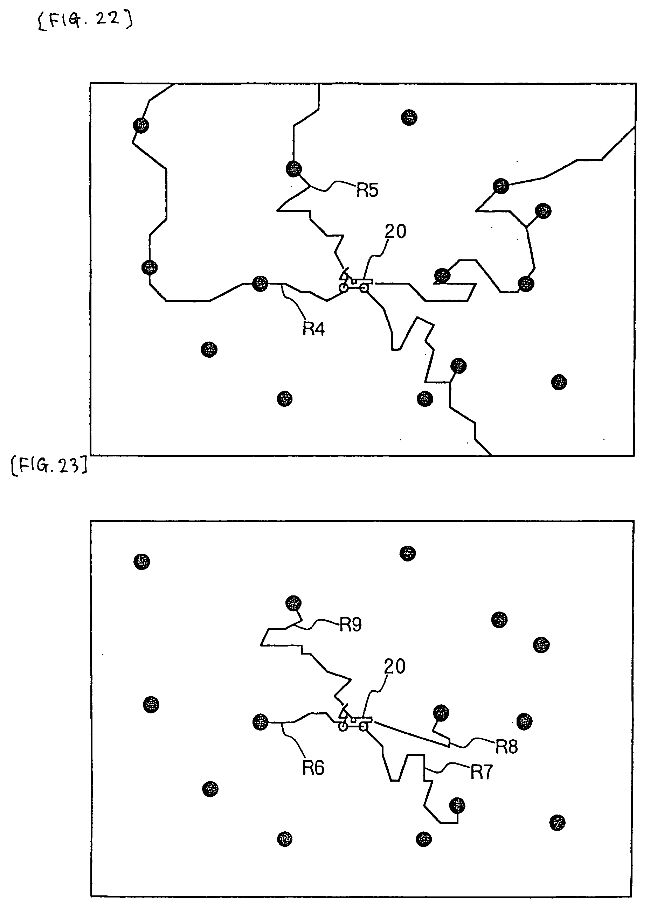

In the example of FIG. 22, routes R4, R5, ... are shown which pass the current place indicated with the pointer 20.

In the example of FIG. 23, routes R6, R7, R8, R9, ... are shown which pass the current place indicated with the pointer 20 and lead to the next places.

The data of the routes R1, R2, ... used are those stored beforehand in the user's database or in other users' storage.

### Practical Applications

As described above, this invention uses a computer device having in advance a map database and a database of information on many places. A user can use many data through external networks such as the Internet to display information on various places together with a map on a monitor screen. The user can see the map on the screen and appropriately choose from the information displayed in relation to the map and set destinations, places as passage points, and routes on the map. This makes it possible according to a predetermined program to sort and display many pieces of information on the screen, search places on the basis of predetermined choosing criteria easily within a short period of time, and set preferable places. Therefore, it is possible to arrange a plan from a state of avague, indefinite plan destinations by clearly sorting ideas, on the basis of general information, the user's preference, and various data on journey such as those on other people's popularity, without looking over places and without committing setting errors, and to make a plan in which routes, passage points, as well as the destinations are correctly set.

## Claims

1. A travel planning system comprising an interface accessible to a map database and a database with regard to each place on the map, having a monitor screen capable of displaying data in accordance with a program, and provided with an information input means for executing the program, **characterized by** displaying a map on said screen as well as displaying information of each place on the displayed map, allowing to select drive-by points in the travel and/or a destination based on the information displayed, and setting a traveling route according to the selected drive-by points and/or destination.

2. A travel planning system according to claim 1, **characterized in that** said database with regard to the places consists of at least one master database comprising predetermined basic information about each place and at least one additional database including new information about each place and enables to select either one or both of the databases to display on said screen.

3. A travel planning system according to claim 1 or 2, **characterized by** displaying data of each place in turn according to the predetermined ranking method when said database with regard to the place is displayed on the screen.

4. A journey planning system according to one of claims 1, 2, and 3, **characterized in that** data of routes that can be chosen are displayed on the screen.
